(19) **Europäisches Patentamt / European Patent Office / Office européen des brevets**

(11) **EP 2 072 948 A1**

(12) **EUROPEAN PATENT APPLICATION**

(43) Date of publication:
**24.06.2009 Bulletin 2009/26**

(51) Int Cl.:
***G01B 17/02*** *(2006.01)*

(21) Application number: **07123501.4**

(22) Date of filing: **18.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor toegepast-natuurwetenschappelijk onderzoek TNO**
**2628 VK Delft (NL)**

(72) Inventors:
• **van der Heiden, Maurits S.**
  **2498 BW Den Haag (NL)**
• **van Limpt, Cornelus Johannes Petrus**
  **3813 RD Amersfoort (NL)**

(74) Representative: **Hatzmann, Martin**
**Vereenigde**
**Johan de Wittlaan 7**
**2517 JR Den Haag (NL)**

(54) **Measuring the thickness of a number of parallel layers**

(57)     Method for measuring the thickness of a number of parallel layers, the method comprising emitting an ultrasonic signal to the layers and picking up the reflection signal and providing a realistic artificial reflection signal using an ultrasonic behaviour model of the parallel layers valid for the relevant ultrasonic signal and for different thickness values of the parallel layers. Matching, in an iterative process, a representation of the reflection signal and a representation of the artificial reflection signal one another, and determining, by iteratively varying in the ultrasonic behaviour model, the thickness values of the parallel layers at which both reflection signals match best, result into the layer thicknesses to be measured.

FIG. 3

EP 2 072 948 A1

**Description**

The present invention refers to a method for measuring the thickness of a number of parallel layers, especially, however not exclusively, layers which e.g. are formed by the walls of a steel-concrete pipe e.g. in use in the area of public water supply systems etc., as well as layers formed by deposit layers in e.g. steel oil pipes.

Due to the high attenuation, e.g. of concrete, deposit etc., present ultrasonic inspection systems are not able to measure both the thickness of the steel and the thickness of the concrete or deposit layer. In general, these layers show frequency dependent attenuation. High frequent systems experience too much attenuation. Low frequent measuring systems, however, are not able to perform the required accuracy. When measuring one material layer, using a low or high frequency source, Fourier transformation of the reflected signals could be a solution. The distance between two successive notches corresponds to the travel time. With the speed of sound inside the layer the thickness can be determined. However, applied to an object having more than one wall, the Fourier figure is non-discriminative as well and the measurement will not be very accurate.

One aim of the present invention is to use a low frequent broadband ultrasonic measuring technique in such way that accurate measuring results will be achieved in more wall systems as well.

The invention is based on the use of interferometry and a model based on inversion techniques, permitting to determine the thickness of the two layers. Also aspects as adhesion between both layers, possible coatings, variations in the propagation velocity and mass density of the concrete etc. may be considered.

According to the invention, in a method for measuring the thickness of a number of parallel layers, next steps are preferred:

- emitting an ultrasonic signal to the layers and picking up the reflection signal;

- providing an artificial reflection signal using an ultrasonic behaviour model of the parallel layers valid for the relevant ultrasonic signal and for different thickness values of the parallel layers;

- matching, in an iterative process, a representation of the reflection signal and a representation of the artificial reflection signal one another, and determining, by iteratively varying in the ultrasonic behaviour model, the thickness values of the parallel layers at which both reflection signals match best.

It is preferred that both the reflection signal and the artificial reflection signal are represented in the frequency domain.

Hereinafter the invention will be discussed with reference to some figures, in which:

Figures 1a and 1b    schematically show an ultrasonic (US) source, two layers the thickness of which has to be measured, and the relevant signal reflections;

Figure 2    schematically shows an ultrasonic (US) source, three layers the thickness of which has to be measured, one being sound absorbing, and the relevant signal reflections;

Figure 3    schematically shows an exemplary system arranged for performing the method according to the invention.

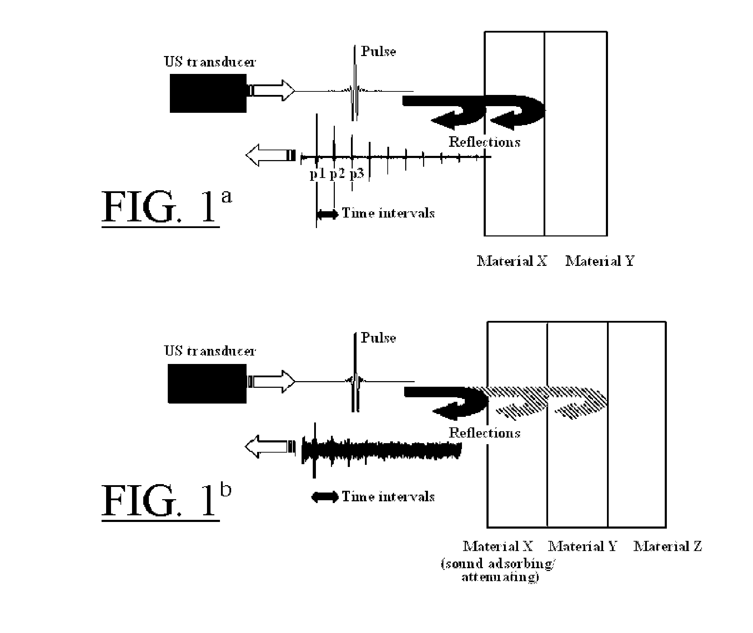

Figure 1a shows an ultrasound transducer sending a pulse which is reflected at each material transition, resulting in a train of rather discriminative reflection pulses p1, p2, p3 etc., if (as in figure 1a) layers are non or only weakly sound absorbing. From the time intervals p1, p2 etc. between the echoes, and the sound speeds in the relevant layers (indicated as Materials X, Y, Z respectively) the layer thicknesses can be calculated. On the contrary, as illustrated in figure 1b, in pulse-echo measurements applied to a sound absorbing (attenuating) layer X the echoes may thus be weakened that the layer thicknesses can not be measured very well due to a reflection signal in which pulses p1, p2 etc. can hardly or not be discriminated.

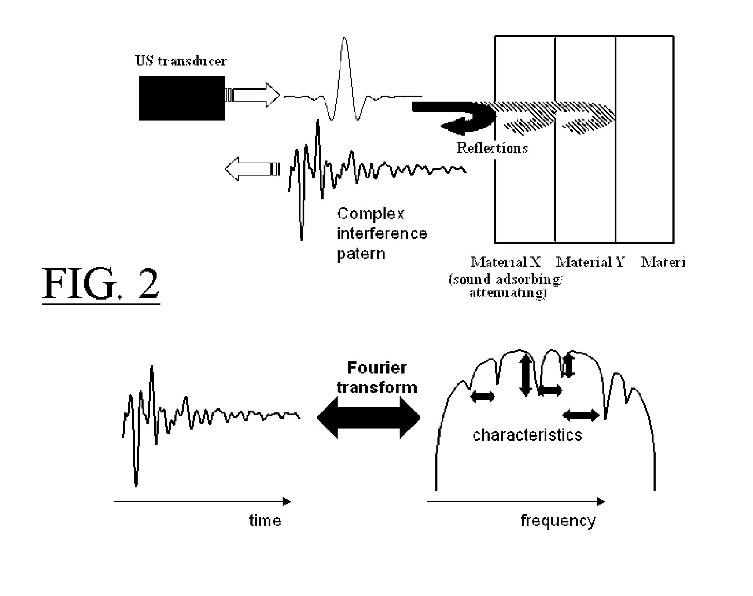

Figure 2 shows, in accordance with the method according to the invention, that the ultrasound transducer sends a broad-band, low-frequency pulse. The reflections result in a signal with a complex interference pattern, which depends on characteristics of the send pulse and the reflecting layers (thicknesses and material properties). Due to the low frequency of the pulse, no discriminative pulses can be found in the reflection signal. Fourier transform of the measurement signal is used to determine the characteristics of the reflecting layered structure.

Figure 1 schematically shows an exemplary system arranged for performing the method according to the invention, comprising a measurement parameters module (MPM) for setting measurement parameters, e.g. the characteristics of the US transducer (like its frequency range, amplitude and phase spectrum, its position and orientation), a Fourier transform module (FTM) for performing a Fourier transform of the reflected signal, as well as a model based simulator (MBS), i.e. a module for outputting artificial, Fourier transformed, reflection signals under control of iteratively variable material (thickness) parameters. An initial material parameters module (IMPM) comprises a-priori information such as material parameters like $C_p$ (longitudinal speed of sound) and $\rho$ (mass density). A constraints parameter module (CPM) is provided for setting boundary conditions such as probable thickness and maximum thickness of each layer.

Referring to the method according to the present invention as defined in the preceding and illustrated in figures 2 (signals) and 3 (exemplary system configuration) this method for measuring the thickness of a number of parallel layers, is performed as follows.

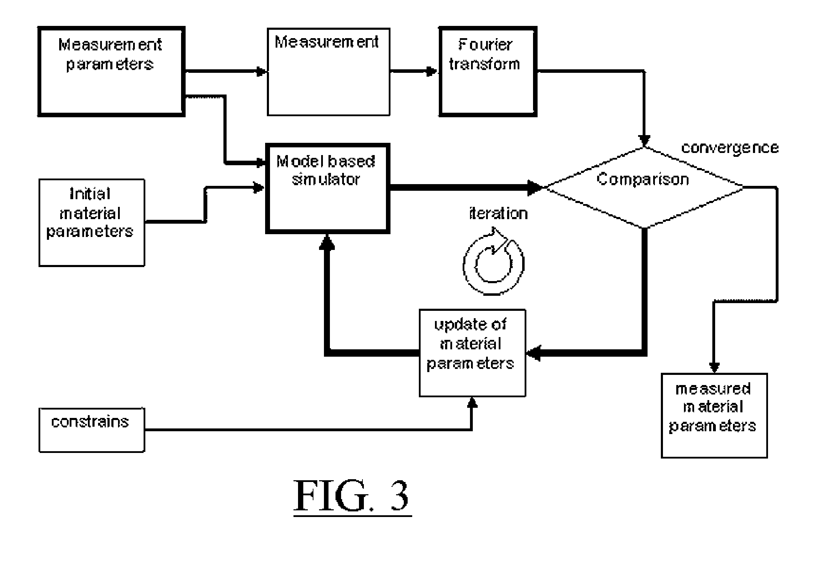

As illustrated in figure 2 (whole) and in figure 3 (the three upper modules), a US transducer, set by the "Measurement parameters module", emits an ultrasonic signal towards the relevant layers and picks up the reflection signal (s). Preferably the reflected signal is converted into in the frequency domain by means of a Fourier or Fourier related transform (e.g. Mellin, Laplace, Hartley, Chirplet transform, see http://en.wikipedia.org/wiki/List_of_Fourier-related_ transforms).

As illustrated in figure 3, an artificial reflection signal is generated (by the "Model based simulator module") using an ultrasonic behaviour model of the parallel layers valid for the relevant ultrasonic signal (set by the "Measurement parameters module") and for different thickness values of the parallel layers (set by/via the "Initial material parameters module").

Matching, in an iterative process, a (e.g. Fourier transformed) representation of the (real) reflection signal and a representation of the artificial reflection signal one another, and determining, by iteratively varying in the ultrasonic behaviour model, the thickness values of the parallel layers at which both reflection signals match best. This matching process is performed in the loop formed by the three modules "Model based simulator", "Comparison", "Update of material parameters" (preferably between some previously set practical/feasible constraints, set in the "Constraints module"). The material parameters, particularly the thicknesses of the layers (see figure 2) for which the (representation of the) real reflection signal and the (representation of the) artificial reflection signal match best is output as the real material parameters, particularly the thicknesses of the layers.

In this way several artificial, Fourier transformed, reflection signals are generated under control of iteratively variable material (thickness) parameters, which are compared with the measured reflection signals. An iterative minimization algorithm, such as the Levenberg-Marquardt algorithm, is used to find the actual material parameters, which are output to the "Measured material parameters module" in figure 3.

A mathematical background will be given now:

At boundaries from e.g. water or another fluid of gaseous medium - material X and from material X and material Y reflection and transmission occur. This is caused by different acoustical material properties. In the materials itself the acoustic wave propagates with the speed of sound.

Transmission is represented by T, Reflection by R and the wave propagation by W. The indices represent the different media.

The W = exp(-*jkd*), describes the propagation inside a layer. Here d is the layer thickness and k is the wave number $k = \dfrac{2\pi f}{c}$, with c is the complex speed of sound and f the used frequency.

The expression for the propagation W can also be interpreted by a time delay $\tau = \dfrac{d}{c}$.

Example, single layer:

With the representation the measured signal from the reflection from the wave field from the water-X transition measured by an ultrasonic transducer is then given by

$$P_{frontwall} = P_0 W_1 R_{12} W_1, \qquad\qquad \text{Equation 1}$$

where $W_1$ represents the propagation from the transducer to the transition and back and $R_{12}$ the reflection of the wave field at this transition. $P_0$ represents the emitted acoustic pressure of the transducer.

The measured signal of the direct wave from the reflected wave field caused by the transition from X to Y transition measured by an ultrasonic transducer is given by

$$P_{backwall} = P_0 W_1 T_{12} W_2 R_{23} W_2 T_{21} W_1.$$

Equation 2

When two ore more transitions are involved, multiple reflections occurs

Single layer with two boundaries:

For a single layer, the total response can be constructed from a number of multiples:

Signal from 1st transition $P_{frontwall} = P_0 W_1 R_{12} W_1$
Signal from 2nd transition $P_{backwall} = P_0 W_1 T_{12} W_2 R_{23} W_2 T_{21} W_1$
Signal from the 1st internal multiple $P_{multiple1} = P_0 W_1 T_{12} W_2 R_{23} W_2 R_{21} W_2 R_{23} W_2 T_{21} W_1$
Signal from the 2nd internal multiple $P_{multiple2} = P_0 W_1 T_{12} W_2 R_{23} W_2 R_{21} W_2 R_{23} W_2 R_{21} W_2 R_{23} W_2 T_{21} W_1$
And so on.

Combining all individual terms and rewriting results in the total measured signal

$$P_{total} = P_0 W_1^2 \{R_{12} + T_{12} T_{21} W_2^2 R_{23}[1 + R_{23} W_2^2 R_{21} + R_{23}^2 W_2^4 R_{21}^2 + ...]\}$$

Equation 3

The term inside the brackets can be interpreted as a Taylor expansion

$$[1 + \alpha^1 + \alpha^2 + ... + \alpha^N] = 1/(1-\alpha),$$

Equation 4

where $\alpha = R_{23} W_2^2 R_{21}$ represents a single multiple inside the layer. With this Taylor expansion the equation can be simplified to:

$$P_{total} = P_0 W_1^2 [R_{12} + \frac{T_{12} T_{21} W_2^2 R_{23}}{1 - R_{23} W_2^2 R_{21}}]$$

Equation 5

Two layers
When two layers are used instead of one, the situation will become more complex.
The best way to describe multiple layers is to define the reflection layer as a combination as described by the equation above without the propagation in medium1.

$$R_{23-2layer} = [R_{23} + \frac{T_{23} T_{32} W_3^2 R_{34}}{1 - R_{34} W_3^2 R_{32}}]$$

Equation 6

Combining equation 5 and 6 results in:

$$P_{total} = P_0 W_1^2 \{ R_{12} + \frac{T_{12}T_{21}W_2^2[R_{23} + \frac{T_{23}T_{32}W_3^2 R_{34}}{1 - R_{34}W_3^2 R_{32}}]}{(1 - W_2^2 R_{21}[R_{23} + \frac{T_{23}T_{32}W_3^2 R_{34}}{1 - R_{34}W_3^2 R_{32}}])} \}$$  Equation 7

Rewriting results in:

$$P_{total} = P_0 W_1^2 \{ R_{12} + \frac{T_{12}T_{21}W_2^2[R_{23} + \frac{T_{23}T_{32}W_3^2 R_{34}}{1 - R_{34}W_3^2 R_{32}}][1 - R_{34}W_3^2 R_{32}]}{(1 - R_{34}W_3^2 R_{32} - W_2^2 R_{21}[R_{23} - R_{34}W_3^2 R_{32}R_{23} + T_{23}T_{32}W_3^2 R_{34}])} \}$$  Equation 8

And finally:

$$P_{total} = P_0 W_1^2 \{ R_{12} + \frac{T_{12}T_{21}W_2^2[R_{23} - R_{23}R_{34}W_3^2 R_{32} + T_{23}T_{32}W_3^2 R_{34}]}{(1 - R_{34}W_3^2 R_{32} - R_{23}W_2^2 R_{21} - R_{34}W_3^2 R_{32}R_{23}W_2^2 R_{21} + T_{23}T_{32}W_3^2 R_{34}W_2^2 R_{21})} \}$$

Equation 9

As can be seen in equation 7, this model can easily be extended to additional layers, for instance an air bubble or water film between a two layered material, or a sandwich construction such as Glare.

Attenuation:

Attenuation inside the medium can be easily be realized by generating a complex speed of sound inside the propagation operators $W_1, W_2, W_4$:

$W_i$ = exp(-$jkd$), where d is the layer thickness and k is the wave number $k = \frac{2\pi f}{c}$, with c is the complex speed of sound inside the layer. $c = c + j\alpha$, where $\alpha$ is the attenuation inside the medium.

Inversion:

Determination of the medium parameters is done by non-linear curve fitting in the frequency domain. This means that the measured response is compared to equation 10.
It must be noticed that the amplitude of all parameters except $P_0$ is less then or to 1.
Depending on the application, some parameters are dominant. These dominant parameters in combination with a Taylor expansion of equation 10 allow us to extract a first guess for the non-linear curve fitting. For instance if a steel layer with a thin protection payer is measured, only R23 R32, R34 and W are dominant. The measurement response can then be approximated by:

$$P_{measured} \approx P_0 W_1^2 T_{12}T_{21}W_2^2[R_{23} + T_{23}T_{32}W_3^2 R_{34} + T_{23}T_{32}W_3^2 R_{34}R_{34}W_3^2 R_{32}],$$

Meaning the response of the front and back wall of the steel layer and the first internal echo inside the steel layer.
Currently most system only focus on the extraction of the time delay between the primary or, when measurable also the multiples as is indicated in figure 1. This means that most, if not all, systems will only determine W2 and W3.

This method allows to robustly determine all medium parameters such as speed of sound, thickness, density and attenuation. The model can also be extended to multiple layers.

**Claims**

1. Method for measuring the thickness of a number of parallel layers, the method comprising:

- emitting an ultrasonic signal to the layers and picking up the reflection signal;
- providing an artificial reflection signal using an ultrasonic behaviour model of the parallel layers valid for the relevant ultrasonic signal and for different thickness values of the parallel layers;
- matching, in an iterative process, a representation of the reflection signal and a representation of the artificial reflection signal one another, and determining, by iteratively varying in the ultrasonic behaviour model, the thickness values of the parallel layers at which both reflection signals match best.

2. Method according to claim 1, the reflection signal as well as the artificial reflection signal being represented in the frequency domain.

3. System for performing the method according to claim 1 or 2.

4. Software program means for performing or controlling a method according to claim 1 or 2.

FIG. 1<sup>a</sup>

FIG. 1<sup>b</sup>

FIG. 2

## FIG. 3

**European Patent Office**

**EUROPEAN SEARCH REPORT**

Application Number

EP 07 12 3501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/101007 A1 (DUBOIS MARC [US] ET AL) 29 May 2003 (2003-05-29) * abstract; figures 2-8 * * paragraphs [0015] - [0018], [0034], [0039], [0044], [0053], [0056], [0072], [0073], [0087], [0107], [0108] * | 1-4 | INV. G01B17/02 |
| X | WO 98/03044 A (ACTIVE IMPULSE SYSTEMS INC [US]) 22 January 1998 (1998-01-22) * abstract; figure 3 * * page 3, line 10 - page 4, line 2 * * page 10, line 30 - page 11, line 15 * | 1-4 | |
| X | US 6 397 680 B1 (LEVESQUE DANIEL [CA] ET AL) 4 June 2002 (2002-06-04) * abstract; figures 1B,2,3 * * column 3, lines 15-34 * * column 4, lines 8-12 * | 1-4 | |

TECHNICAL FIELDS SEARCHED (IPC)

G01B

The present search report has been drawn up for all claims

| Place of search | Date of completion of the search | Examiner |
|---|---|---|
| Berlin | 6 June 2008 | Popovici, Mihai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 12 3501

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2008

| Patent document cited in search report | | Publication date | Patent family member(s) | | Publication date |
|---|---|---|---|---|---|
| US 2003101007 | A1 | 29-05-2003 | AU | 2002352921 A1 | 10-06-2003 |
| | | | EP | 1451570 A2 | 01-09-2004 |
| | | | WO | 03046544 A2 | 05-06-2003 |
| | | | US | 2005102109 A1 | 12-05-2005 |
| WO 9803044 | A | 22-01-1998 | EP | 0913071 A1 | 06-05-1999 |
| | | | JP | 2000515244 T | 14-11-2000 |
| US 6397680 | B1 | 04-06-2002 | NONE | | |

EPO FORM P0459

For more details about this annex : see Official Journal of the European Patent Office, No. 12/82